Europäisches Patentamt

European Patent Office

Office européen des brevets

(11) Veröffentlichungsnummer: **0 199 933**
**A1**

# (12) EUROPÄISCHE PATENTANMELDUNG

(21) Anmeldenummer: 86103026.0

(22) Anmeldetag: 07.03.86

(51) Int. Cl.⁴: **H 04 Q 3/60**
**H 04 M 3/22, H 04 Q 3/54**
**G 06 F 11/16**

(30) Priorität: 10.04.85 DE 3512846

(43) Veröffentlichungstag der Anmeldung:
05.11.86 Patentblatt 86/45

(84) Benannte Vertragsstaaten:
AT BE CH DE FR GB IT LI NL SE

(71) Anmelder: Siemens Aktiengesellschaft Berlin und
München
Wittelsbacherplatz 2
D-8000 München 2(DE)

(72) Erfinder: Seidel, Günther, Ing. (grad.)
August-Zeune-Weg 4
D-8000 München 70(DE)

(54) Schaltungsanordnung für Fernmeldeanlagen, insbesondere Fernsprechvermittlungsanlagen, in denen individuelle Geräte von einem zentralen Schaltwerk angesteuert werden.

(57) Über individuelle Ansteuerstromkreise (ul - u8) angesteuerte und sich daraufhin an gemeinsamen Datenbus (G1;
G2) anschaltende individuelle Geräte (U1 - U8) erhalten bei
Ansteuerung eine gerätindividuelle Kennung, die sie speichern. Datenbus (G1, G2) und Ansteuereinrichtung (Z1, Z2)
sind zweifach vorgesehen. Individuelle Geräte (U1 - U8)
vergleichen bei Ansteuerung die erhaltene Kennung mit
gespeicherter Kennung und/oder übertragen die gespeicherte Kennung an Ansteuereinrichtung (Z1, Z2), die diese
Kennung mit einer der Ansteuerung entsprechenden ursprünglichen Adresse vergleicht. Die zu speichernde Kennung wird über dieselbe gemeinsame Busleitung übertragen
wie die zwecks Vergleiches jeweils neu übertragene Kennung. Beide Kennungen werden vom zentralen Schaltwwerk
nicht unterschieden.

EP 0 199 933 A1

0199933

Siemens Aktiengesellschaft
Berlin und München

Unser Zeichen
VPA 85 P 1219  E

Schaltungsanordnung für Fernmeldeanlagen, insbesondere Fernsprechvermittlungsanlagen, in denen individuelle Geräte von einem zentralen Scahltwerk angesteuert werden.

Es ist bereits eine Schaltungsanordnung für Fernmeldeanlagen, insbesondere Fernsprechvermittlungsanlagen, bekanntgeworden, in denen individuelle Geräte von einem zentralen Schaltwerk angesteuert werden, indem dieses mittels einer an eine Ansteuereinrichtung jeweils abgegebenen Adresse die Ansteuereinrichtung veranlaßt, jeweils einem individuellen Gerät über einen von ihr zu letzterem verlaufenden Ansteuerstromkreis eine Ansteuerinformation zu übertragen, wobei die verschiedenen Geräte über verschiedene oder teilweise verschiedene Ansteuerstromkreise ansteuerbar sind, und in denen mittels der Ansteuerinformation Anschaltemittel im jeweiligen individuellen Gerät veranlaßt werden, letzteres mit einer zum zentralen Schaltwerk führenden gemeinsamen Busleitung zu verbinden.

Eine Schaltungsanordnung dieser Art ist durch den digitalen Konzentrator bekannt, den die Zeitschrift "telcom report", 5 (1982) No. 4 (englischsprachige Ausgabe) S. 262 u. folgende beschreibt. Die eingangs genannte Ansteuereinrichtung besteht in diesem bekannten Falle aus einem Modulprozessor (SLMCP), der jeweils für eine Mehrfachteilnehmeranschlußschaltung (SLM) vorgesehen ist. Eine im unteren Bild auf Seite 263 dieser Zeitschrift dargestellte derartige Ansteuereinrichtung empfängt zur Ansteuerung jeweils eines einzigen individuellen Gerätes (Einzel-Teilnehmeranschlußschaltung SUC/COSLAC) eine Hes 1 Phl /

Adresse von einem zentralen Schaltwerk (Konzentratorprozessor DICC), wodurch diese Ansteuereinrichtung veranlaßt ist, über einen von ihr zu dem individuellen Gerät verlaufenden Ansteuerstromkreis eine Ansteuerinformation zu übertragen. Die verschiedenen individuellen Geräte sind über verschiedene oder teilweise verschiedene Ansteuerstromkreise ansteuerbar. Es kann daher jeweils ein eigener Ansteuerstromkreis unabhängig von allen übrigen Ansteuerstromkreisen jeweils von der Ansteuereinrichtung zu jedem der individuellen Geräte verlaufen. Die Ansteuerstromkreise können aber auch teilweise gemeinsam für die verschiedenen individuellen Geräte vorgesehen sein. In diesem Falle haben also die verschiedenen individuellen Geräte nur teilweise verschiedene Ansteuerstromkreise.

Eine derartige Anordnung zeigt z.B. die deutsche Patentschrift 1 562 230 (VPA 68/2194). Hierin ist eine koordinatenmäßige Ansteuerung individueller Geräte durch eine Ansteuereinrichtung bekannt. In diesem Falle sind die Anschaltemittel elektromagnetische Relais mit Anschaltekontakten. Die Anschaltemittel können aber ebensogut auch durch rein elektronisch arbeitende Schaltmittel realisiert sein.- Wie weiterhin aus der erwähnten Darstellung auf Seite 263 unten hervorgeht, dienen die Anschaltemittel dazu, ein individuelles Gerät aufgrund seiner Ansteuerung mit einer zum zentralen Schaltwerk führenden gemeinsamen Busleitung zu verbinden.

Die Zweckmäßigkeit einer mittels Adressen kodiert ansteuerbaren Ansteuereinrichtung, die je für eine kleinere Anzahl von individuellen Geräten vorgesehen ist, und jedes derselben über gänzlich oder teilweise gerätindividuelle Ansteuerstromkreise ansteuert, besteht darin, daß die Anzahl der von einem zentralen Schaltwerk ausgehenden Stromkreise relativ klein gehalten werden kann, daß aber nicht pro individuelles Gerät ein eigener Adressenempfänger aufgewendet werden muß, sondern diese Adressenempfänger jeweils gemeinsam für eine Mehrzahl von baugruppenmäßig zusammengefaßten individuellen Geräten, zum Beispiel von acht Geräten, verwendet werden kann. Bei der Ansteuerung individueller Geräte besteht jedoch auch das Problem der Überwachbarkeit einer fehlerfreien Abwicklung der erwähnten Ansteuer- und Anschaltevorgänge. Gelangen die von einem zentralen Schaltwerk abgegebenen kodierten Ansteueradressen bis zu den anzusteuernden individuellen Geräten, so besteht die Möglichkeit, die Richtigkeit der Adressenübermittlung durch eine Rücksendung einer jeweils empfangenen Adresse oder durch Rücksendung ihres Komplementes oder durch Ansteuerung mittels Adresse und deren Komplement laufend zu überwachen. Ferner bestehen andere Überwachungsmöglichkeiten, wie sie zum Beispiel in der bereits genannten deutschen Patentschrift angegeben sind, unter der Voraussetzung, daß die Ansteuerstromkreise unmittelbar von dem zentralen Schaltwerk ausgehen, welches die Ansteuer- und Anschaltevorgänge abwickelt.

Die zuvor angegebenen Überwachungsmöglichkeiten hinsichtlich der Richtigkeit der Abwicklung der Ansteuer- und Anschaltevorgänge lassen sich nicht bei einer Anordnung der eingangs angegebenen Art anwenden. Eine Überwachung einer fehlerfreien Abwicklung von Ansteuer- und Anschaltevorgängen in der Weise, daß die individuellen Geräte aufbaumäßig gleich und gegenseitig austauschbar sein können, ermöglicht eine durch die Zeitschrift "IBM Technical Disclosure Bulletin", Vol. 18, No. 3, August 1975, Seiten 878 und 879, bekannt gewordene Schaltungsanordnung für Fernmeldeanlagen, insbesondere Fernsprechvermittlungsanlagen, in denen individuelle Geräte von einem von zwei parallel und unabhängig voneinander mit den individuellen Geräten zusammenarbeitenden zentralen

Schaltwerken mit eigenen Ansteuereinrichtungen angesteuert werden, indem jenes mittels einer an eine Ansteuereinrichtung jeweils abgegebenen Adresse die Ansteuereinrichtung veranlaßt, jeweils einem individuellen Gerät über einen von ihr zu letzterem verlaufenden Ansteuerstromkreis eine Ansteuerinformation zu übertragen, wobei die verschiedenen Geräte über verschiedene oder teilweise verschiedene Ansteuerstromkreise seitens der betreffenden Ansteuereinrichtung ansteuerbar sind, und in denen mittels der Ansteuerinformation Anschaltmittel im jeweiligen individuellen Gerät veranlaßt werden, letzteres mit einer zum zentralen Schaltwerk führenden gemeinsamen Busleitung zu verbinden, und in denen in den individuellen Geräten geräteindividuell Kennungen gespeichert sind, und in denen von einem zentralen Schaltwerk bei Ansteuerung jeweils eines individuellen Gerätes mittels Adresse und mittels der daraus resultierenden Ansteuerinformation in Zusammenhang von Informationsübertragungsvorgängen vom zentralen Schaltwerk zu dem jeweils individuellen Gerät und/oder umgekehrt eine gerätindividuelle Kennung über die Busleitung an dieses individuelle Gerät übertragen wird, und in denen stets wiederkehrend bei Ansteuerung eines individuellen Gerätes seitens eines der beiden zentralen Schaltwerke entweder die dabei übertragene Kennung mit der in dem individuellen Gerät gespeicherten Kennung in letzterem verglichen wird oder die in dem individuellen Gerät gespeicherte Kennung zu dem zentralen Schaltwerk übertragen und hier mit der zuvor an die Ansteuereinrichtung abgegebenen Adresse verglichen wird, und in denen die im individuellen Gerät bereits gespeicherte Kennung mit der vor oder mit jedem Informationsübertragungsvorgang jeweils übertragenen Kennung verglichen und die Durchführung von Informationsübertragungsvorgängen und/oder die Wertung übertragener Informationen in Abhängigkeit steht vom Ergebnis des jeweiligen Vergleiches.

Die Erfindung bezieht sich auf eine Schaltungsanordnung dieser zuvor angegebenen bekannten Art. Die durch die genannte Zeitschrift bekannte Schaltungsanordnung sieht bei der darin angegebenen Schaltungsanordnung vor, daß die Übertragung einer in einem Speichermodul zu speichernden Kennung über ein diesem Zweck dienendes, den Speichermodulen wiederum gemeinsames Leitungssystem erfolgt. Zur Speicherung der Kennung in einem individuellen Gerät ist dieses anstatt über die dem Datenaustausch dienende gemeinsame Busleitung vielmehr über das dieser Speicherung dienende besondere Leitungssystem anzusteuern.

Für die Erfindung besteht die Aufgabe, eine Schaltungsanordnung der angegebenen Art zu vereinfachen, sowie deren Betriebsvorgänge einfacher zu gestalten.

Die Erfindung löst die gestellte Aufgabe dadurch, daß mittels der bei jedem der Ansteuerungsvorgänge eines individuellen Gerätes ihm übertragenen Kennung sowohl deren Speicherung, insbesondere bei einem nach Inbetriebnahme des betreffenden individuellen Gerätes ersten Ansteuerungsvorgang, als auch der Vergleich bei jedem der weiteren Ansteuerungsvorgänge durchführbar ist, wobei für die Übertragung der in jedem der individuellen Geräte zu speichernden Kennung die gemeinsame Busleitung ebenso wie für die der Durchführung jedes der Vergleichsvorgänge dienenden Kennungen benutzt wird.

Durch die Erfindung werden also die Ansteuerungsvorgänge vereinfacht, indem zwischen einer Ansteuerung zwecks Speicherung der Kennung und einer Ansteuerung zwecks Durchführung eines Datenaustausches einschließlich Vergleich nicht mehr unterschieden zu werden braucht. Durch Mitbenutzung der für den Datenaustausch und für die Über-

tragung der Kennung zwecks Duchführung des Vergleiches vorgesehenen gemeinsamen Busleitung zusätzlich auch für die Übertragung der in jedem der individuellen Geräte zu speichernden Kennung wird nicht nur ein zweites Leitungssystem eingespart, sondern auch die hierfür pro individuelles Gerät zwangsläufig erforderlichen Anschaltemittel. Durch die Erfindung wird eine Schaltungsanordnung der bekannten Art also sowohl hinsichtlich ihres Aufbaues als auch hinsichtlich der abzuwickelnden Funktionsabläufe wesentlich vereinfacht.

Eine Weiterbildung der Erfindung sieht vor, daß die im individuellen Gerät gespeicherte Kennung diejenige ist, die jeweils bei einem unmittelbar vorausgegangenen Ansteuerungsvorgang vom zentralen Schaltwerk an dieses individuelle Gerät übertragen worden ist, und daß ein Vergleicher im individuellen Gerät die im Zusammenhang mit einem Informationsübertragungsvorgang übertragene Kennung und die beim jeweils vorhergehenden Informationsübertragungsvorgang zum individuellen Gerät übertragene und hier zwischengespeicherte Kennung und/oder ein Vergleicher im zentralen Schaltwerk die in Zusammenhang mit einem erneuten Informationsübertragungsvorgang bereits übertragene oder noch zu übertragende Kennung und die beim jeweils vorhergehenden Informationsübertragungsvorgang zum individuellen Gerät übertragene, hier zwischengespeicherte und beim erneuten Informationsübertragungsvorgang wieder zum zentralen Schaltwerk zurückübertragene Kennung erhält. Hiernach wird also die Speicherung der Kennung in jedem individuellen Gerät bei jedesmaliger Ansteuerung erneuert.

Der erfindungsgemäße Vergleich ist also auf zweierlei Weise praktisch realisierbar. Dieser Vergleich kann sowohl im individuellen Gerät als auch in dem zentralen Schaltwerk vorgenommen werden. Da davon ausgegangen werden kann, daß nur bei einem Teil der durchgeführten, insbesondere zyklisch durchgeführten, Ansteuervorgänge tatsächlich auch ein Informationsaustausch in Form einer Übertragung von Steuerbefehlen von dem zentralen Schaltwerk jeweils an ein individuelles Gerät und von Meldungen jeweils von einem individuellen Gerät an das zentrale Schaltwerk stattfindet, ist es zweckmäßig, eine Übertragung der genannten Kennungen auch auf diejenigen Ansteuer- und Anschaltevorgänge zu beschränken, bei denen tatsächlich auch ein Informationsaustausch dieser Art stattfindet. Deshalb ist gemäß weiterer Ausbildung der Erfindung vorgesehen, daß die bei Ansteuerung eines individuellen Gerätes an diese übertragene Kennung zusammen mit einem Steuerbefehl übertragen wird, und daß dieser nur zur Ausführung gebracht wird, wenn die zusammen mit ihm übertragene Kennung mit der gespeicherten Kennung übereinstimmt.

Eine entsprechende andere weitere Ausbildung der Erfindung sieht vor, daß eine bei Ansteuerung eines individuellen Gerätes von diesem an das zentrale Schaltwerk übertragene Kennung zusammen mit einer Meldung übertragen wird, und daß diese Meldung in dem zentralen Schaltwerk nur gewertet wird, wenn die zusammen mit ihr übertragene Kennung mit der ursprünglich vom zentralen Gerät an die Ansteuereinrichtung abgegebene Adresse übereinstimmt.

Gemäß diesen Weiterbildungen der Erfindung werden Kennungen also immer nur im Zusammenhang mit übertragenen Steuerbefehlen bzw. übertragenen Meldungen mitübertragen. ohne eine Einbuße an Überwachungsqualität kann dadurch der für die Überwachung erforderliche zusätzliche Informationsfluß ganz erheblich eingeschränkt bzw. klein gehalten werden.

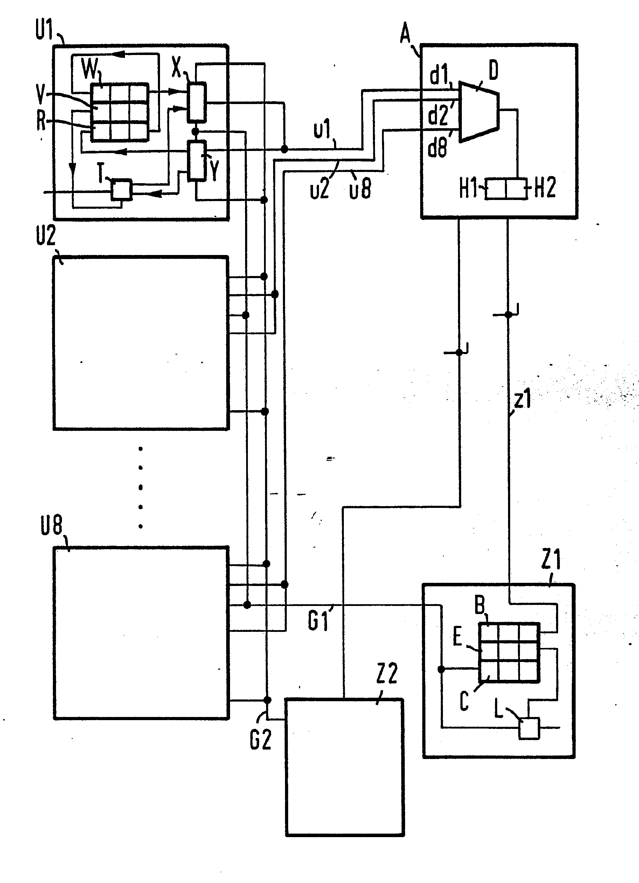

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist. Die Beschreibung geht von einer bekannten Darstellung eines digitalen Konzentrators aus, wie sie z.B. in der oben genannten Zeitschrift "telcom report" 5 (1982) No. 4 (englischsprachige Ausgabe), Seite 262 ff der Fachwelt vorliegt.

Zwei zentrale Schaltwerke Z1, Z2 sind Prozessoren eines digitalen Konzentrators (Digital Line Circuit DLU). Von einer Mehrzahl von Gruppen von Teilnehmeranschlußschaltungen ist auszugsweise die Gruppe der Teilnehmeranschlußschaltungen U1 bis U8 dargestellt. Die Teilnehmeranschlußschaltungen jeweils einer Gruppe sind in bekannter Weise zu einer Mehrfachteilnehmeranschlußschaltung zusammengefaßt. Die Teilnehmeranschlußschaltungen einer Mehrfachteilnehmeranschlußschaltung stehen über zwei Busleitungen G1 und G2 mit den beiden Konzentratorprozessoren in Verbindung. Jede Teilnehmeranschlußschaltung ist mit Anschaltemitteln X und Y einzeln an jede der beiden gemeinsamen Busleitungen G1 und G2 alternativ anschaltbar.

Es sind noch weitere Mehrfachteilnehmeranschlußschaltungen der gleichen Art vorgesehen. Die Teilnehmeranschlußschaltungen sämtlicher Mehrfachteilnehmeranschlußschaltungen stehen über die gleichen Bussysteme G1 und G2 mit den beiden Konzentratorprozessoren Z1 und Z2 in der angegebenen Weise anschaltbar in Verbindung.

Jeder Mehrfachteilnehmeranschlußschaltung (U1 bis U8) ist eine gemeinsame Anschalteeinrichtung A zugeordnet. Die weiteren Anschalteeinrichtungen der anderen Mehrfachteilnehmeranschlußschaltungen sind untereinander und mit der dargestellten Mehrfachteilnehmeranschlußschaltung A an die beiden Konzentratorprozessoren Z1 und Z2 parallel angeschaltet. Die Anschalteeinrichtungen sind Modulprozessoren. Sie üben also auch weitere Funktionen aus. Im vorliegenden Zusammenhang beschränkt sich die Beschreibung jedoch weitgehend auf die Darstellung der Ansteuer- und Anschaltevorgänge, die diese Modulprozessoren auszuführen haben. Es ist deshalb in der weiteren Beschreibung auch immer nur von Ansteuereinrichtungen (A) die Rede.

Die Ansteuereinrichtung A dient dem Zweck, die Ansteuerung und Anschaltung der als Teilnehmeranschlußschaltungen ausgebildeten individuellen Geräte U1 bis U8 jeweils an einen der beiden Konzentratorprozessoren Z1 bzw. Z2 zu bewerkstelligen. Die Ansteuerung und Anschaltung der Teilnehmeranschlußschaltungen jeweils an einen der Konzentratorprozessoren erfolgt zyklisch kontinuierlich und einzeln nacheinander. Die Teilnehmeranschlußschaltungen werden durch die beiden Konzentratorprozessoren gescannt. Dieser Vorgang wird auch als "Pollen" bezeichnet.

Die Ansteuereinrichtung A weist unter anderem einen Decoder auf, der die Aufgabe hat, bei Empfang einer mehrstelligen binärcodierten Adresse jeweils einen einzigen seiner Ausgänge d1 bis d8 zu markieren.

Hat einer der Konzentratorprozessoren, zum Beispiel Z1, eine Anschaltung einer der Teilnehmeranschlußschaltungen, zum Beispiel U1 herbeizuführen, so überträgt dieser Konzentratorprozessor eine binärcodierte mehrstellige Adresseninformation über einen Adressenbus z1 zur Ansteuereinrichtung A. Diese Adresseninformation umfaßt unter anderem die die betreffende Teilnehmeranschlußschaltung, zum

Beispiel U1, bezeichnende Adresse. Diese Adresse umfaßt einen ersten Teil, der die jeweilige Mehrfachteilnehmeranschlußschaltung, also die Gruppe von Teilnehmeranschlußschaltungen bezeichnet, zu der die jeweils anzusteuernde Teilnehmeranschlußschaltung gehört. Mit diesem ersten Teil der Adresseninformation ist letztlich also mit der betreffenden Mehrfachteilnehmeranschlußschaltung auch deren Ansteuereinrichtung A bezeichnet. Die Ansteuereinrichtung A enthält einen zweiteiligen Adressenempfänger H1/H2. Der erste Teil der Adresseninformation wird in den Adressenempfängerteil H1 aufgenommen. Trifft in diesem Adressenempfängerteil als erster Teil der übertragenen Adresseninformation die Adresse der betreffenden Mehrfachteilnehmeranschlußschaltung und ihre Ansteuereinrichtung A ein, so wird diese Tatsache in der Ansteuereinrichtung A erkannt und führt hierin dazu, daß der zweite Teil der Ansteueradresse, der in dem Adressenempfängerteil A2 aufgenommen wird, zum Decoder D weitergegeben wird.

Mit der vom Konzentratorprozessor Z1 über den Adressenbus z1 übertragenen zweiteiligen Adresseninformation ist also erstens die Ansteuereinrichtung A, und mit ihr die zugehörige Mehrfachteilnehmeranschlußschaltung (U1 bis U8) bezeichnet, und zweitens innerhalb der betreffenden Gruppe von Teilnehmeranschlußschaltungen eine bestimmte von diesen. Der zweite Teil der Adresseninformation wird dabei vom Decoder D aufgenommen und führt hier dazu, daß einer seiner Ausgänge d1 bis d8 markiert wird. Es sei angenommen, daß der Ausgang d1 aufgrund des zweiten Adressenteils der empfangenen Ansteueradresse markiert wird. Diese Markierung gelangt nun zu den Anschaltereinrichtungen Y und X. Diese dienen dazu, die innerhalb der Teilnehmeranschlußschaltung U1 mit Pfeilen versehenen Informationsübertragungswege mit dem einen oder

0199933

- 11 -     VPA 85 P 1219 E

dem anderen der beiden Busleitungssysteme G1 bzw. G2 zu verbinden. In diesem Zusammenhang sei angenommen, daß zusätzlich zu der von der Ansteuereinrichtung A zu der betreffenden Teilnehmeranschlußschaltung hin abgegebenen Ansteuerinformation dieser Teilnehmeranschlußschaltung eine Information darüber gegeben wird, welcher der beiden Konzentratorprozessoren jeweils die in Angriff genommene Anschaltung bewerkstelligt. Dementsprechend erfolgt die Anschaltung an eines der beiden Busleitungssysteme. Hierzu sind die beiden Anschalteeinrichtungen X und Y in der Lage, jeweils eine Verbindung zu dem in der Zeichnung oberen oder unteren Eingang bzw. Ausgang herzustellen.

Das Ausführungsbeispiel sieht lediglich je einen Ansteuerstromkreis, zum Beispiel u1, pro Teilnehmeranschlußschaltung, zum Beispiel U1, vor. Es ist jedoch auch möglich, eine zweikoordinatenmäßige oder mehrkoordinatenmäßige Ansteuerung vorzusehen. Eine zweikoordinatenmäßige Ansteuerung ist der weiter oben bereits genannten deutschen Patentschrift zu entnehmen.

Bei jedesmaliger Ansteuerung einer Teilnehmeranschlußschaltung wird hier nach erfolgter Anschaltung zunächst eine gerätindividuelle Kennung über die betreffende Busleitung übertragen. Jene gelangt über die entsprechende Anschalteeinrichtung, zum Beispiel Y zu einem in der Zeichnung aus drei Speichereinheiten bestehenden Speicher R. Diese Kennung ist also unverwechselbar mit den Kennungen, die den anderen Teilnehmeranschlußschaltungen zugeordnet sind. Die Konzentratorprozessoren geben also jeweils bei Ansteuerung einer bestimmten Teilnehmeranschlußschaltung eine dieser fest zugeordnete gerätindividuelle Kennung an die betreffende Teilnehmeranschlußschaltung ab. Im Zuge eines Anschalteprogrammes oder zwi-

- 12 -    VPA 85 P 1219  E

schen diesem und dem nächstfolgenden Anschaltevorgang ein
und derselben Teilnehmeranschlußschaltung wird die von
dem mehrteiligen Seicher R aufgenommene Kennung an einen
mehrteiligen Speicher W weitergegeben. Wird also eine
Teilnehmerschaltung ein erstes Mal angesteuert, so befindet sich danach in ihrem mehrteiligen Speicher W die
ihr individuell zugeordnete Kennung.

Bei jedesmaliger erneuter Ansteuerung einer Teilnehmeranschlußschaltung erhält diese zunächst ihre gerätindividuelle Kennung. Diese wird im Speicher R in der
beschriebenen Weise eingeschrieben. Von einem vorhergehenden oder dem ersten Ansteuerungsvorgang her befindet sich im Speicher W die betreffende Kennung. Bei ordnungsgemäßem Ablauf sämtlicher Ansteuerungsvorgänge müssen diese beiden Kennungen, also die gespeicherte Kennung und die neu übertragene Kennung, übereinstimmen. Ist
nach erfolgter Ansteuerung erneut im Speicher R die übertragene Kennung eingetroffen, so nimmt ein Vergleicher V
einen Vergleich auf Übereinstimmung vor. Dies kann in sinnfälliger Weise bitweise erfolgen. Stellt der Vergleicher V
Übereinstimmung fest, so gibt er ein entsprechendes Übereinstimmungssignal an eine Torschaltung T weiter, die dadurch durchlässig wird für einen nach der Kennung über
das betreffende Busleitungssystem übertragenen Steuerbefehl. Diese Weitergabe des Steuerbefehles ist also davon
abhängig, daß der Vergleicher V Übereinstimmung zwischen
der gespeicherten und der neu übertragenen Kennung
festgestellt hat.

Der Vergleich mit Hilfe der gerätindividuellen Kennung
wird also jeweils im Zusammenhang mit Informationsübertragungsvorgängen vom Konzentratorprozessor zum individuellen Gerät und/oder umgekehrt durchgeführt.

Es werden nicht nur Steuerbefehle von den Konzentratorprozessoren zu den verschiedenen Teilnehmeranschlußschaltungen übertragen, sondern in ähnlicher Weise werden auch
Meldungen durch die Konzentratorprozessoren von den verschiedenen Teilnehmeranschlußschaltungen per Anschaltung
hereingeholt, was ebenfalls zyklisch gleichmäßig und einzeln nacheinander bezüglich der Gesamtheit der Teilnehmeranschlußschaltungen erfolgt. Geht es um einen Abruf
von einer der Teilnehmeranschlußschaltungen, zum Beispiel
U1, so wird im Unterschied zu einem einen Steuerbefehl
signalisierenden Zusatzmerkmal ein anderes Zusatzmerkmal übertragen, das den Abruf von Meldungen von der betreffenden Teilnehmeranschlußschaltung signalisiert. In
diesem Fall wird die Ansteuereinrichtung X betätigt.
Nach erfolgter Anschaltung wird die im mehrteiligen
Speicher W gespeicherte Kennung löschungsfrei über die
Anschalteeinrichtung X und das betreffende Busleitungssystem G1 zu dem jeweiligen Konzentratorprozessor übertragen. In diesem gelangt die in der jeweils angesteuerten Teilnehmeranschlußschaltung A gespeicherte Kennung
(W) zu einem Speicher C. Diese Kennung, die mit dem
zweiten Teil der im Speicher B noch gespeicherten Ansteuerinformation übereinstimmen möge, wird mit Hilfe
eines Vergleichers E auf Übereinstimmung geprüft. Wird
diese Übereinstimmung festgestellt, so wird die anschließend hieran an der betreffenden Teilnehmeranschlußschaltung abgerufene Meldung in diesem Konzentratorprozessor gewertet. Bei Ansteuerung eines individuellen
Gerätes wird also die von diesem an den betreffenden
Konzentratorprozessor übertragene Kennung zusammen mit
der abgerufenen Meldung übertragen. Diese Meldung wird in
dem Konzentratorprozessor nur gewertet, wenn die zusammen
mit dieser Meldung übertragene Kennung mit der ursprünglich am Konzentratorprozessor an die Ansteuereinrichtung abgegebenen Adresseninformation bzw. deren zweitem Teil
übereinstimmt. Hierzu ist eine Torschaltung L vorgesehen, die für eine Weitergabe der im Konzentratorprozessor Z1 eingetroffenen Meldung vorgesehen ist.

4 Patentansprüche
1 Figur

Patentansprüche

1. Schaltungsanordnung für Fernmeldeanlagen, insbesondere Fernsprechvermittlungsanlagen, in denen individuelle Geräte von einem von zwei parallel und unabhängig voneinander mit den individuellen Geräten zusammenarbeitenden zentralen Schaltwerken mit eigenen Ansteuereinrichtungen angesteuert werden, indem jenes mittels einer an eine Ansteuereinrichtung jeweils abgegebenen Adresse die Ansteuereinrichtung veranlaßt, jeweils einem individuellen Gerät über einen von ihr zu letzterem verlaufenden Ansteuerstromkreis eine Ansteuerinformation zu übertragen, wobei die verschiedenen Geräte über verschiedene oder teilweise verschiedene Ansteuerstromkreise seitens der betreffenden Ansteuereinrichtung ansteuerbar sind, und in denen mittels der Ansteuerinformation Anschaltmittel im jeweiligen individuellen Gerät veranlaßt werden, letzteres mit einer zum zentralen Schaltwerk führenden gemeinsamen Busleitung zu verbinden, und in denen in den individuellen Geräten geräteindividuell Kennungen gespeichert sind, und in denen von einem zentralen Schaltwerk bei Ansteuerung jeweils eines individuellen Gerätes mittels Adresse und mittels der daraus resultierenden Ansteuerinformation in Zusammenhang von Informationsübertragungsvorgängen vom zentralen Schaltwerk zu dem jeweils individuellen Gerät und/oder umgekehrt eine gerätindividuelle Kennung über die Busleitung an dieses individuelle Gerät übertragen wird, und in denen stets wiederkehrend bei Ansteuerung eines individuellen Gerätes seitens eines der beiden zentralen Schaltwerke entweder die dabei übertragene Kennung mit der in dem individuellen Gerät gespeicherten Kennung in letzterem verglichen wird oder die in dem individuellen Gerät gespeicherte Kennung zu dem zentralen Schaltwerk übertragen und hier mit der zuvor an die Ansteuereinrichtung abgegebenen Adresse verglichen wird und in denen die im individuellen Gerät bereits gespeicherte Kennung mit der vor oder mit jedem Informationsübertragungsvorgang jeweils übertragenen Kennung verglichen und die Durchführung von Informationsübertragungsvorgängen und/oder die Wertung übertragener Informationen in Abhängigkeit steht vom Ergebnis des jeweiligen Vergleiches, d a d u r c h  g e k e n n - z e i c h n e t ,   daß mittels der bei jedem der Ansteuerungsvorgänge eines individuellen Gerätes ihm übertragenen Kennung sowohl deren Speicherung, insbesondere bei einem nach Inbetriebnahme des betreffenden individuellen Gerätes ersten Ansteuerungsvorgang, als auch der Vergleich bei jedem der weiteren Ansteuerungsvorgänge durchführbar ist, wobei für die Übertragung der in jedem der individuellen Geräte zu speichernden Kennung die gemeinsame Busleitung ebenso wie für die der Durchführung jedes der Vergleichsvorgänge dienenden Kennungen benutzt wird.

2. Schaltungsanordnung nach Anspruch 1, d a d u r c h  g e k e n n z e i c h n e t ,   daß die im individuellen Gerät gespeicherte Kennung diejenige ist, die jeweils bei einem unmittelbar vorausgegangenen Ansteuerungsvorgang vom zentralen Schaltwerk an dieses individuelle Gerät übertragen worden ist, und daß ein Vergleicher im individuellen Gerät die im Zusammenhang mit einem Informationsübertragungsvorgang übertragene Kennung und die beim jeweils vorhergehenden Informationsübertragungsvorgang zum individuellen Gerät übertragene und hier zwischengespeicherte Kennung und/oder ein Vergleicher im zentralen Schaltwerk die in Zusammenhang mit einem erneuten Informationsübertragungsvorgang bereits übertragene oder noch zu übertragende Kennung und die beim jeweils vorhergehenden Informationsübertragungsvorgang zum individuellen Gerät übertragene, hier zwischengespeicherte und beim erneuten Informationsübertragungsvorgang wieder zum zentralen Schaltwerk zurückübertragene Kennung erhält.

3. Schaltungsanordnung nach Patentanspruch 1, d a - d u r c h g e k e n n z e i c h n e t , daß die bei Ansteuerung eines individuellen Gerätes an dieses übertragene Kennung zusammen mit einem Steuerbefehl übertragen wird, und daß dieser nur zur Ausführung gebracht wird, wenn die zusammen mit ihm übertragene Kennung mit der gespeicherten Kennung übereinstimmt.

4. Schaltungsanordnung nach Patentanspruch 1, d a - d u r c h g e k e n n z e i c h n e t , daß eine bei Ansteuerung eines individuellen Gerätes von diesem an das zentrale Schaltwerk übertragene Kennung zusammen mit einer Meldung übertragen wird, und daß diese Meldung in dem zentralen Schaltwerk nur gewertet wird, wenn die zusammen mit ihr übertragene Kennung mit der ursprünglich vom zentralen Gerät an die Ansteuereinrichtung abgegebenen Adresse übereinstimmt.

**0199933**

Europäisches
Patentamt

**EUROPÄISCHER RECHERCHENBERICHT**

Nummer der Anmeldung

EP 86 10 3026

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | IBM TECHNICAL DISCLOSURE BULLETIN, Band 18, Nr. 3, August 1975, Seiten 878-879, New York, US; E.J. ANNUNZIATA et al.: "Basic storage module selection check" * Insgesamt * | 1,3 | H 04 Q 3/60<br>H 04 M 3/22<br>H 04 Q 3/54<br>G 06 F 11/16 |
| A | US-A-3 609 704 (SCHURTER) * Spalte 1, Zeile 66 - Spalte 2, Zeile 37 * | 1,4 | |
| A | DE-A-2 527 888 (SIEMENS) * Seite 3, Zeile 30 - Seite 6, Zeile 13 * | 1,4 | RECHERCHIERTE SACHGEBIETE (Int Cl 4)<br><br>H 04 Q<br>H 04 M<br>G 06 F |

Der vorliegende Recherchenbericht wurde für alle Patentansprüche erstellt

| Recherchenort | Abschlußdatum der Recherche | Prüfer |
|---|---|---|
| DEN HAAG | 08-07-1986 | VANDEVENNE M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82